# EUROPÄISCHE PATENTSCHRIFT

(11) **EP 0 431 105 B1**
(45) Veröffentlichungstag und Bekanntmachung des Hinweises auf die Patenterteilung: **19.01.1994**
(21) Anmeldenummer: 90908502.9
(22) Anmeldetag: 30.05.1990
(51) Int. Cl.: F01N 3/02, F01N 3/26, F01N 3/28

(54) **VORRICHTUNG ZUM ENTFERNEN OXIDIERBARER BZW. VERBRENNBARER PARTIKEL AUS ABGASEN**
DEVICE FOR REMOVING OXIDIZABLE OR COMBUSTIBLE PARTICLES FROM EXHAUST GASES
DISPOSITIF POUR ELIMINER DES PARTICULES OXYDABLES OU COMBUSTIBLES DES GAZ D'ECHAPPEMENT

(30) Priorität: 01.06.1989 DE 3917888
(43) Veröffentlichungstag der Anmeldung: 12.06.1991
(73) Patentinhaber: HKK Hanseatisches Kreativ Kontor Gesellschaft für Entwicklung und Vertrieb mbH, D-22457 Hamburg (DE)
(72) Erfinder: Sibbertsen, Walter, D-2000 Hamburg 53 (DE); Flatow, Karl-Heinz, D-2050 Hamburg 80 (DE)
(74) Vertreter: Glawe, Delfs, Moll & Partner
(86) Internationale Anmeldenummer: EP9000864
(87) Internationale Veröffentlichungsnummer: WO9015228

(56) Entgegenhaltungen:
- DE-A- 1 476 588
- US-A- 3 577 728
- US-A- 3 892 070

## Beschreibung

Die Erfindung betrifft eine Vorrichtung zum Entfernen oxidierbarer bzw. verbrennbarer Partikel wie Ruß aus derartige Partikel enthaltenden Abgasen nach dem Oberbegriff des Anspruchs 1.

Das ernsteste Abgasproblem beim Dieselmotor ist das Rauchen, und zwar einmal wegen der Sichtbehinderung auf Verkehrswegen und zum anderen aufgrund der Eigenschaft des Rauches, andere schädliche Abgasbestandteile, wie Schwefeloxide und Kohlenwasserstoffe an sich zu binden und in den menschlichen Körper hineinzutragen. Heißer Rauch ist stark rußhaltig und entsteht durch unvollständige Verbrennung infolge Luftmangels bei hohen Temperaturen. Er tritt bei Vollast oder Überlast auf und besteht vorwiegend aus schwarzen Rußkörnchen von 0,3 bis 0,1 µm.

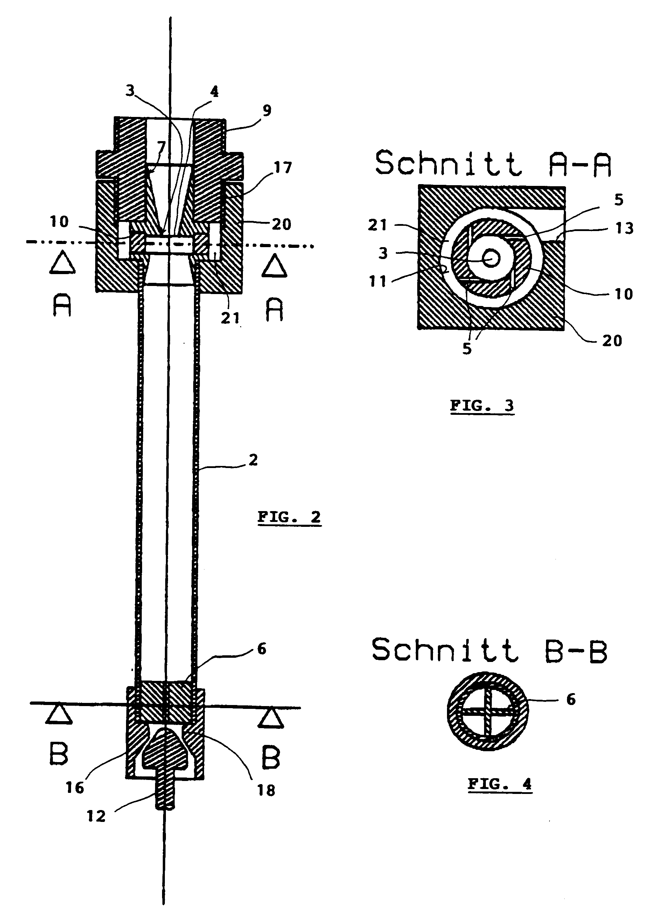

Es ist eine Vorrichtung bekannt (US-A-3 577 728), bei der die Abgase tangential in ein Rohr geleitet werden, wo sie eine Wirbelströmung bewirken und das Rohr nach einer Seite verlassen. Die Anordnung ist dabei so gewählt, daß auf der anderen Seite durch eine Blende Frischluft eingesaugt wird, die sich mit den Abgasen vermischt. Das Prinzip, daß dabei angewendet wird, ist das Prinzip eines Injektors. Man wird dabei erwarten, daß durch das Ansaugen von kühler Außenluft die Temperatur der Abgase sinkt. Die Temperatur mag immer noch hoch genug sein, um, wie dies bei der Entgegenhaltung angestrebt ist, restliche Kohlenwasserstoffe zu verbrennen. Zum Verbrennen von Rußteilchen in Abgasen von Dieselmotoren reicht die Temperatur aber nicht aus, selbst wenn in dem Rohr, wie in der Entgegenhaltung behauptet, eine gewisse Temperaturerhöhung auftreten sollte. So sind zur Zündung zumindest bei der Ausführungsform der Fig. 3 eine oder mehrere Zündkerzen 28 vorgesehen, die zwar zur Einleitung der Verbrennung restlicher Kohlenwasserstoffe, nicht aber zur Einleitung der Verbrennung von Rußteilchen geeignet sind.

Der Erfindung liegt die Aufgabe zugrunde, eine Vorrichtung zum Entfernen oxidierbarer bzw. verbrennbarer Partikel aus Abgasen zu schaffen, die insbesondere als Nachverbrenner bei einem Dieselmotor eingesetzt werden kann.

Zur Lösung dieser Aufgabe wird eine Vorrichtung gemäß Hauptanspruch vorgeschlagen, wobei besonders bevorzugte Ausführungs- formen in den Unteransprüchen angegeben sind.

Wirbelrohre sind an sich bekannt und gehen auf Arbeiten von G. Ranques und R. Hilsch zurück. Bei Wirbelrohren wird ein unter Druck stehendes Gas tangential eingeblasen, das sich wirbelförmig nach beiden Seiten des Rohres aufteilt und durch Blenden an den Rohrenden austritt. Es bildet sich dabei eine axiale Wirbelströmung aus. An dem einen Ende des Wirbelrohres tritt heißes Gas aufgrund adiabatischer Kompression aus. An dem anderen Ende des Wirbelrohres erfolgt eine adiabatische Expansion durch die Düse, so daß dort kaltes Gas austritt. Eine derartige Vorrichtung ist beispielsweise in Zusammenhang mit einer Druckluftblaseeinrichtung gemäß DE-OS 36 00 147 beschrieben, um Kaltluft auf Werkstücke aufzublasen.

Überraschenderweise hat sich gezeigt, daß man beim tangentialen Einblasen von mit verbrennbaren Teilchen wie Ruß angereicherten Abgasen unter einem Druck von 0,5 bis 10 bar, vorzugsweise 5 bar, einen wirbelförmigen Luftstrom erhält, dessen äußere Zonen eine Temperaturerhöhung von etwa 100°C gegenüber dem einströmenden Gas aufweisen. Da die Abgase von Dieselmotoren eine Temperatur von etwa 500° haben, läßt sich damit im Wirbelrohr eine Temperaturerhöhung auf etwa 600°C erzielen, was ausreicht, um die oxidierbaren Rußteilchen zu verbrennen. Die Verbrennung erfolgt deswegen, weil die Rußteilchen aufgrund des tangentialen Einströmens in einer Art Zykloneffekt eine hohe Drehgeschwindigkeit erhalten, die sie an die Rohrwand schleudert, und wegen der Temperaturerhöhung auf mehr als den Zündpunkt für Ruß erwärmt werden. Die aufgrund des Zykloneffektes gereinigten Gase in der Rohrmitte verlassen dieses durch die Blende. Der Rest einschließlich des Abbrandes verläßt das Rohr durch die Drossel.

Da eine Aufteilung in einen heißeren und einen kühleren Gasstrom stattfindet, muß selbstverständlich der die Drossel verlassende Gasstrom eine höhere Temperatur haben als wenn wie bei der vorbekannten Vorrichtung eine Trennung von heißerer und kühlerer Luft nicht stattfindet, im Gegenteil sogar noch kühlere Luft angesaugt und dem Abgas zugemischt wird. Aus diesem Grunde kann mit dem erfindungsgemäßen Wirbelrohr eine Verbrennung der Rußteilchen erreicht werden, was mit dem vorbekannten Injektorrohr nicht möglich erscheint.

Zu optimaler Temperaturerhöhung ist es zweckmäßig das Wirbelrohr zusätzlich mit einer äußeren Wärmeisolierschicht zu umgeben. Ferner ist es zum Verbrennen von Rußteilchen von Vorteil, wenn man die Innenfläche des Rohres mit einem Katalysator beschichtet.

Im folgenden wird die Erfindung anhand von Zeichnungen näher erläutert; es zeigen:
- Figur 1: eine schematische Darstellung eines Ausführungsbeispiels in Verbindung mit einem Dieselmotor;
- Figur 2: einen Schnitt durch ein Wirbelrohr;
- Figur 3: einen Schnitt entlang der Linie A-A durch Figur 2; und
- Figur 4: einen Schnitt entlang der Linie B-B durch das Wirbelrohr.

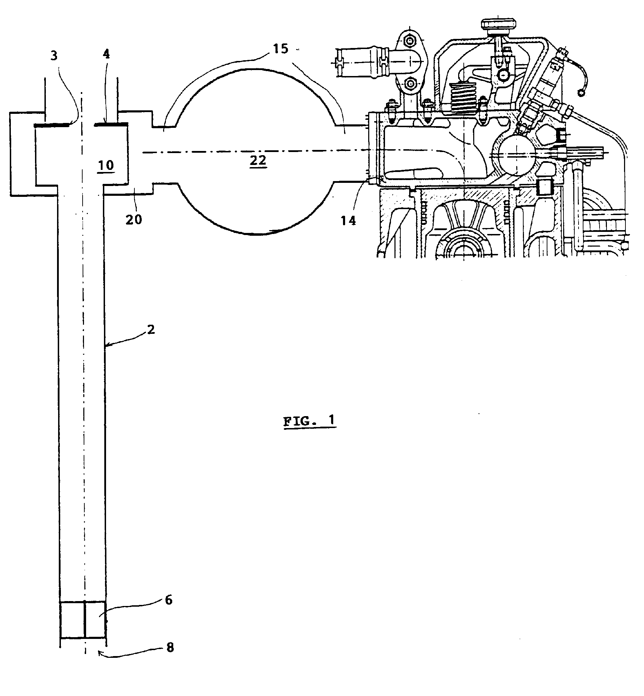

**Figur 1** zeigt ein mit einem Dieselmotor 1 verbundenes Wirbelrohr 2. Der Dieselmotor 1 ist nur schematisch dargestellt, und zwar im Schnitt durch seinen Zylinderkopf. Der Fachmann erkennt darin den Kolben, die Einspritzdüse, das Auslaßventil und letztendlich den Auspuffkrümmer 14, an den eine Abgasleitung 15 angeflanscht ist. Die Abgasleitung 15 besitzt einen Dämpfungsbehälter 22, der dazu dient, Druckstöße der schubweise ausgestoßenen Abgase aufzufangen. Ein derartiger Dämpfungsbehälter 22 ist jedoch nicht in jedem Fall erforderlich. Einfache Versuche des Fachmannes zeigen, ob dieser in Verbindung mit der erfindungsgemäßen Vorrichtung vorgesehen werden soll. Es wird darauf hingewiesen, daß die Abgasleitung 15 mit ihrem Dämpfungsbehälter 22 lediglich schematisch dargestellt ist. Das vom Dieselmotor 1 entfernte Ende der Abgasleitung 15 geht in eine Ringkammer 20 über, in der ein Ende eines Wirbelrohres 2 untergebracht ist. Das Wirbelrohr 2 ist in dieser Darstellung ebenfalls nur schematisch angedeutet, soweit es für ein Verständnis seiner Funktion erforderlich ist. Einzelheiten des Wirbelrohres 2 sind den Figuren 2 - 4 zu entnehmen.

Das Wirbelrohr 2 hat im allgemeinen eine Länge von 10 cm - 20 cm und einen Durchmesser von 2 cm - 4 cm, vorzugsweise 3 cm. Dabei ist es zweckmäßig, wenn das Verhältnis von Rohrlänge zum Durchmesser 10 : 1 bis 20 : 1 und vorzugsweise 15 : 1 beträgt. An dem in Figur 1 oberen Ende des Wirbelrohres 2, das in der Ringkammer 20 der Abgasleitung 15 untergebracht ist, ist das Wirbelrohr 2 mit einem Düsenring 10 versehen, der eine den Querschnitt bis auf eine zentrale Öffnung 3 freilassende Blende 4 absperrt. In der Nähe der Blende 4 werden die Abgase aus der Abgasleitung 15 tangential in den Düsenring eingeleitet, so daß sie darin einen schraubenförmigen Wirbelstrom einrichten, der sich über die gesamte axiale Länge des Wirbelrohres 2 erstreckt. Das dem Düsenring 10 abgewandte Ende 8 des Wirbelrohres 2 ist weitgehend offen und weist lediglich einen Stromstabilisator 6 auf, durch den der Wirbelstrom austreten kann. Auf den Stromstabilisator 6 wird später noch in Verbindung mit Figur 4 näher eingegangen.

Durch die adiabatische Kompression der Abgase im Wirbelrohr 2 erfolgt eine Temperaturerhöhung um bis zu etwa 100°C, so daß an dem unteren Ende 8 des Wirbelrohres 2 heiße Abgase aus dem Stromstabilisator 6 austreten. Hingegen erfolgt an der Blende 4 eine adiabatische Expansion der Abgase, was zu einer Abkühlung des Gasstromes führt. Bei einem Abgasstrom von 5 - 10 bar Druck, der in den Düsenring 10 mit einer Eingangstemperatur von +20°C eingeleitet wird, kann am kalten Ende des Wirbelrohres 2 Kaltluft von +15°C bei geschlossener Drossel, und bis -40°C bei teilweise geöffneter Drossel austreten.

**Die Figuren 2 und 3** zeigen Einzelheiten des Wirbelrohres 2 von Figur 1. Man erkennt im oberen Teil die Ringkammer 20, die das kalte Ende des Wirbelrohrs 2 umgibt. Die Ringkammer 20 ist in Figur 3 im Schnitt dargestellt. In der gezeigten Ausführungsform hat die Ringkammer 20 einen quadratischen Querschnitt mit einer Axialbohrung 11, in die das Wirbelrohr 2 eingesetzt ist. Die Ringkammer 20 besitzt ferner einen Einlaß 13, durch den die heißen Abgase vom Dieselmotor 1 einströmen können. Zu diesem Zweck ist die Ringkammer 20 gemäß Figur 1 mit der Abgasleitung 15 verbunden, und zwar zweckmäßigerweise über eine an sich bekannte Schraub- oder Klemmverbindung. In die Ringkammer 20 ist der in den Figuren 2 und 3 erkennbare Düsenring 10 eingesetzt, der in der dargestellten Ausführungsform vier tangentiale Bohrungen 5 aufweist. Die Bohrungen 5 durchsetzen die gesamte Wandstärke des Düsenringes 10. Der Außendurchmesser des Düsenringes 10 ist deutlich kleiner als der Innendurchmesser der Axialbohrung 11 der Ringkammer 20, so daß dieser einen Ringraum 21 bildet, der den Düsenring 10 umgibt. Durch den Einlaß 13 einströmende Abgase gelangen daher zunächst in den Ringraum 21 und strömen durch die Bohrung 5 tangential in das Innere des Wirbelrohrs 2, wobei ihr Impuls eine schraubenförmige Wirbelbewegung entlang der Länge des Wirbelrohres 2 bewirkt. Durch diese Wirbelbewegung werden die Abgase und insbesondere die darin enthaltenen festen Partikel, wie Rußteilchen, nach außen gegen die Wand des Wirbelrohres 2 geschleudert. Im Inneren des Wirbelrohres 2 erfolgt dabei eine adiabatische Kompression, die zu einer Temperaturerhöhung von bis etwa 100°C führt. Wenn die einströmenden Dieselabgase eine Temperatur von etwa 500°C haben, so ergibt dies im Inneren des Wirbelrohres 2 eine Temperatur von 600°C, die ausreicht, um die Rußteilchen zu verbrennen. Das Verbrennen erfolgt unter anderem deswegen, weil im Inneren des Wirbelrohres 2 bei Verwendung von Dieselabgasen normalerweise ein ausreichend hoher Sauerstoffüberschuß herrscht. Reicht dieser nicht aus, so können zusätzliche Luftzufuhrkanäle vorgesehen werden, die radial in das Innere des Wirbelrohres 2 führen. Sie sind in der dargestellten Ausführungsform allerdings nicht gezeigt.

Bei der in Figur 2 dargestellten Ausführungsform wird der Düsenring 10 von einer Blende 4 gehalten, indem die die Blendenöffnung 3 umgebende Stirnfläche nach außen hin abgedreht ist und damit eine Ringschulter bildet, auf der der Düsenring 10 aufliegt. Die Blende 4 weist außerdem einen Zylinder 7 auf, der die Außenwand einer sich konisch nach außen erweiternden Düse bildet. Über den Zylinder 7 ist ein Verschlußstück 9 gesteckt, das mit einem Außengewinde 17 in die Wand der Ringkammer 20 eingeschraubt ist, die zu diesem Zweck natürlich ein entsprechendes Innengewinde aufweist. Auf diese Weise zentriert das Verschlußstück 9 die Blende 4 und den auf diese aufgesetzten Düsenring 10 sowohl gegenüber dem Wirbelrohr 2, als auch gegenüber der Ringkammer 20. Damit wird außerdem erreicht, daß der Düsenring 10 unmittelbar benachbart zu der Blendenöffnung 3 liegt, so daß die Abgase in unmittelbarer Nachbarschaft zur Blendenöffnung 3 einströmen. Der Teil der Abgase, der durch adiabatische Expansion durch die Blendenöffnung 3 austritt, wird daher nicht erst im Wirbelrohr 2 verwirbelt und adiabatisch auf höhere Temperatur komprimiert. Es erfolgt vielmehr sofort eine adiabatische Expansion nach außen.

Im folgenden wird die Figur 4 in Verbindung mit dem unteren Ende des Wirbelrohres 2 erläutert. In das untere Ende des Wirbelrohres 2 ist ein Stromstabilisator 6 eingesetzt, der die Form eines Kreuzes hat. Das Kreuz wird von zwei senkrecht zueinander stehenden Trennwänden gebildet, deren Länge etwa dem Durchmesser des Wirbelrohres 2 entspricht. Dadurch werden am unteren, heißen Ende 8 des Wirbelrohres vier axial verlaufende Kammern gebildet, die den schraubenförmigen Wirbelstrom in eine achsparallele Strömung umlenken. Auf das untere Ende des Wirbelrohres ist außerdem ein Drosselstutzen 16 aufgesetzt, der eine den Querschnitt des Wirbelrohres 2 etwas verringernde Drosselöffnung 18 besitzt. Die Drosselöffnung 18 ist eine Ringschulter mit nach außen hin kegelförmigen Anlageflächen, auf die ein Drosselstück 12 aufgesetzt und davon entfernt werden kann. Durch Bewegen des Drosselstücks 12 in Richtung auf den Stromstabilisator 6 wird der auströmende Abgasstrom gedrosselt. Dadurch läßt sich die Temperatur des aus der Blendenöffnung 3 austretenden Abgasstromes einstellen.

Wie bereits erwähnt, kann die Außenwand des Wirbelrohres 2 von einer Wärmeisolationsschicht umgeben sein, damit sich die Temperaturerhöhung von etwa 100°C sicher einstellt.

## Patentansprüche

1. Vorrichtung zum Entfernen oxidierbarer bzw. verbrennbarer Partikel, wie Ruß, aus derartige Partikel enthaltenden Abgasen, bei der der Ausgang der Abgasleitung (15) über eine oder mehrere tangential gerichtete Bohrungen (5) mit einem Rohr (2) in Strömungsverbindung steht, an dessen einem Ende im geringen Abstand zu den tangential gerichteten Bohrungen (5) eine Blende (4) mit einer zur Mittelachse des Wirbelrohrs (2) zentralen Öffnung (3) und an dessen anderem Ende im größeren Abstand zu den tangential gerichteten Bohrungen (5) eine verstellbare Drossel (12) angeordnet ist, wobei in dem Rohr (2) sich ein Abgaswirbel bildet, dadurch gekennzeichnet, daß das Rohr (2) ein Wirbelrohr nach Ranques und Hilsch ist, in dem sich das Gas nach beiden Enden des Rohrs (2) aufteilt, wobei am Drosselende heißeres Gas und am Blendenende kühleres Gas austritt.

2. Vorrichtung nach Anspruch 1, **dadurch gekennzeichnet,** daß der Ausgang der Abgasleitung (15) mit einer das Wirbelrohr (2) umgebenden Ringkammer (20) verbunden ist, und daß der in dieser Ringkammer (20) liegende Wirbelrohrabschnitt einen Düsenring (10) mit den mehreren tangential gerichteten Bohrungen (5) aufweist.

3. Vorrichtung nach Anspruch 2, **dadurch gekennzeichnet,** daß zwischen dem Düsenring (10) und der verstellbaren Drossel (12) ein oder mehrere, radial bis in die Mitte des Wirbelrohres (2) reichende Luftzufuhrkanäle vorgesehen sind.

4. Vorrichtung nach einem der Ansprüche 1 bis 3, **dadurch gekennzeichnet**, daß das Wirbelrohr (2) zwischen der Ringkammer (20) mit einer äußeren Wärmeisolierschicht umgeben ist.

5. Vorichtung nach Anspruch 1 bis 4, **dadurch gekennzeichnet**, daß die Innenfläche des Wirbelrohres (2) mit einem Abgaskatalysator beschichtet ist.

6. Vorrichtung nach Anspruch 1 bis 5, **dadurch gekennzeichnet**, daß sie als Nachverbrenner an der Abgasleitung (15) oder nach einem Abgasleitungs-Dämpfungsbehälter (22) eines Dieselmotors angeordnet ist.

## Claims

1. Device for removing oxidisable or combustible particles, such as soot, from exhaust gases containing such particles, in which the outlet of the exhaust gas pipe (15) is in flow connection by way of one or more tangentially directed bores (5) with a pipe (2), at one end of which, at a short distance from the tangentially directed bores (5), a diaphragm (4) with an opening (3) which is central with respect to the central axis of the vortex pipe (2) and at its other end, at a greater distance from the tangentially directed bores (5), an adjustable throttle (12) is located, an exhaust gas vortex forming in the pipe (2), characterised in that the pipe (2) is a vortex pipe according to Ranques and Hilsch, in which the gas is distributed towards both ends of the pipe (2), hotter gas escaping from the throttle end and cooler gas from the diaphragm end.

2. Device according to Claim 1, characterised in that the outlet of the exhaust gas pipe (15) is connected to an annular chamber (20) surrounding the vortex pipe (2), and that the vortex pipe section located in this annular chamber (20) comprises a nozzle ring (10) with the plurality of tangentially directed bores (5).

3. Device according to Claim 2, characterised in that provided between the nozzle ring (10) and the adjustable throttle (12) are one or more air supply channels extending radially into the centre of the vortex pipe (2).

4. Device according to one of Claims 1 to 3, characterised in that the vortex pipe (2) is surrounded between the annular chamber (20) by an outer thermal insulating layer.

5. Device according to Claims 1 to 4, characterised in that the inner surface of the vortex pipe (2) is coated with an exhaust gas catalyst.

6. Device according to Claims 1 to 5, characterised in that it is located as an after burner on the exhaust gas pipe (15) or after an exhaust gas pipe damping cup (22) of a diesel engine.

## Revendications

1. Dispositif pour éliminer des particules oxydables ou combustibles, telles que la suie, des gaz d'échappement comprenant de telles particules, dans lequel la sortie de la conduite d'échappement (15) est reliée à un tuyau (2) par un ou par plusieurs alésages (5) tangentiels afin d'établir la liaison du flux, un diaphragme (4) avec une ouverture (3) centrale par rapport à l'axe du tuyau à tourbillonnement (2) étant disposé à une extrémité dudit tuyau (2) et à une faible distance des alésages (5) tangentiels et un étranglement (12) réglable étant disposé à l'autre extrémité dudit tuyau (2) et à une distance plus grande par rapport aux alésages (5) tangentiels, un tourbillonnement de gaz d'échappement se formant dans le tuyau (2), **caractérisé en ce que** le tuyau (2) est un tuyau à tourbillonnement selon RANQUES et HILSCH dans lequel le gaz est réparti vers les deux extrémités du tuyau (2), le gaz plus chaud sortant au niveau de l'extrémité à étranglement et le gaz plus froid sortant au niveau de l'extrémité à diaphragme.

2. Dispositif selon la revendication 1, caractérisé en ce que la sortie de la conduite de gaz d'échappement (15) est reliée à une chambre annulaire (20) entourant le tuyau à tourbillonnement (2) et que la partie de ce tuyau à tourbillonnement située dans cette chambre annulaire (20) présente un anneau à buses (10) comprenant les alésages (5) tangentiels.

3. Dispositif selon la revendication 2, caractérisé en ce qu'un ou plusieurs canaux d'alimentation en air sont prévus entre l'anneau à buses (10) et l'étranglement (12) réglable, ces canaux avançant, dans le sens radial, jusqu'au centre du tuyau à tourbillonnement (2).

4. Dispositif selon l'une des revendications 1 à 3, caractérisé en ce que le tuyau à tourbillonnement (2) est entouré d'une couche extérieure d'isolation calorifuge au niveau de la chambre annulaire (20).

5. Dispositif selon les revendications 1 à 4, caractérisé en ce que la surface intérieure du tuyau à tourbillonnement (2) est recouverte d'un catalyseur de gaz d'échappement.

6. Dispositif selon les revendications 1 à 5, caractérisé en ce qu'il est monté, comme chambre de post-combustion, sur la conduite de gaz d'échappement (15) ou derrière une chambre d'amortissement (22) des gaz d'échappement d'un moteur diesel.
